# EUROPEAN PATENT APPLICATION

(11) **EP 2 537 807 A1**
(43) Date of publication of application: **26.12.2012**
(21) Application number: 10846100.5
(22) Date of filing: 17.02.2010
(51) Int. Cl.: C02F 1/44, B01D 61/14, B01D 63/00, B01D 63/08, B01D 65/02, B01D 65/06, B01D 69/08, B01D 69/12, B01D 71/36, B01D 71/68, C02F 1/24, C02F 1/463, C02F 1/465

(54) **SEPARATION MEMBRANE MODULE FOR PROCESSING OF OIL-CONTAINING WASTE WATER, METHOD FOR PROCESSING OIL-CONTAINING WASTE WATER, AND APPARATUS FOR PROCESSING OIL-CONTAINING WASTE WATER**

(71) Applicant: Sumitomo Electric Fine Polymer, Inc., Sennan-gun, Osaka 590-0458 (JP)
(72) Inventor: MORITA Toru, Sennan-gun Osaka 590-0458 (JP); IDA Kiyoshi, Sennan-gun Osaka 590-0458 (JP)
(74) Representative: Cross, Rupert Edward Blount
(86) International application number: PCT/JP2010/052349
(87) International publication number: WO 2011/101961

(57) **Abstract**

Provided is a separation membrane module which is suitable for filtration of oil-containing wastewater. The separation membrane module for oil-containing wastewater treatment separates water-insoluble oil from oil-containing wastewater that has high turbidity and/or high temperature. The separation membrane module for oil-containing wastewater treatment is characterized by using a hollow fiber membrane which is composed of an alkali-resistant porous membrane selected from polytetrafluoroethylene (PTFE), polysulfone (PSF), and polyether sulfone (PES) and which has a tensile strength of 30 N or more, and characterized in that each of the hollow fiber membrane and an end-sealing member of the hollow fiber membrane has a heat distortion temperature of 100°C or higher.

## Description

### Technical Field

The present invention relates to a separation membrane module for oil-containing wastewater treatment, an oil-containing wastewater treatment method using the same, and an oil-containing wastewater treatment apparatus provided with a cleaning device for a separation membrane module, in which water-insoluble oil is efficiently separated from oil-containing wastewater over a long period of time.

### Background Art

There have been provided treatment apparatuses and treatment methods for removing water-insoluble oil from wastewater containing oil including the water-insoluble oil.
Oil-field wastewater is one type of oil-containing wastewater, and it is necessary to remove water-insoluble oil from the oil-field wastewater. That is, in drilling crude oil, generally, by injecting seawater into oil reservoirs in strata, the pressure of the water-insoluble oil is increased to ensure the production volume. Since the "oil-field wastewater", which is wastewater used in drilling crude oil, contains a large amount of water-insoluble oil, the oil-field wastewater is disposed of after the water-insoluble oil is subjected to a removal process.
However, in recent years, since water-insoluble oil can be a factor causing pollution in oceans, lakes, and the like, regulations on the water-insoluble oil content in wastewater have been tightened. In the strictest countries and regions, it is required to set the water-insoluble oil content to be less than 5 mg/L.

Usually, after oil-field wastewater is subjected to solid separation by means of weight difference separation, separation using a solid/liquid hydrocyclone, or the like, primary treatment is performed using a plate filter, a liquid/liquid hydrocyclone, or the like, secondary treatment is performed using coagulation sedimentation, pressure floatation, or the like, and then tertiary treatment, such as filtration or activated carbon treatment, is performed. As the level of treatment increases (primary, secondary, tertiary), the amount of treated water decreases. Therefore, it becomes difficult to catch up with treatment of oil-field wastewater that is discharged in large amounts, which is a problem. Consequently, in the treatment of oil-field wastewater discharged in large amounts, microseparation means cannot be used in view of the treatment speed thereof. As a result, in practice, it is said that treatment is limited to up to a water-insoluble oil content of 20 mg/L. The treatment cost is also a matter of concern.

Under the circumstances, it is considered to be promising to use a separation membrane module in treatment of oil-containing wastewater. The separation membrane module is advantageous in that it can secure a large amount of treated water, and advanced water treatment can be performed. For example, Japanese Unexamined Patent Application Publication No. 5-245472 (PTL 1) provides a treatment method in which, as shown in Fig. 9, oil-containing wastewater 100 is supplied to the primary side S1 of a filtration apparatus 102 provided with ceramic separation membranes 101 having a mean pore diameter smaller than that of oil particles, treated water is taken out from the secondary side S2 of each ceramic separation membrane 101, and at the same time, concentrated water is supplied to the primary side of the filtration apparatus in a circulatory manner until the concentrated water on the primary side reaches a predetermined concentration.

### Citation List

### Patent Literature

PTL 1: Japanese Unexamined Patent Application Publication No. 5-245472

### Summary of Invention

### Technical Problem

However, in continuous treatment of oil-containing wastewater, the flow rate is decreased because of adhesion of water-insoluble oil to the surfaces of separation membranes. Consequently, usually, in order to decompose and remove water-insoluble oil and to continuously perform filtration, chemical cleaning using a strongly alkaline agent, such as sodium hydroxide, is required. However, in PTL 1 in which ceramic membranes are used as separation membranes, because of insufficient resistance to an alkaline aqueous solution having a high concentration that is effective for cleaning away water-insoluble oil, the surfaces of membranes cannot be chemically cleaned sufficiently, which is a problem. Furthermore, although physical strength of the membranes is originally high, as the accumulation frequency of chemical cleaning with the alkali or the like increases, the strength gradually decreases, and under the influence of impact, although very small in quantity, applied when physical cleaning, such as backwashing or air diffusion, is performed, problems, such as the formation of cracks, easily occur. Furthermore, in PTL 1, since the separation membranes are flat membranes, the amount of water to be treated is limited, and the method is not suitable for continuous treatment of oil-containing wastewater that is discharged in large amounts.

Furthermore, separation membranes composed of polyvinylidene fluoride (PVDF), which are currently commercially available as having high chemical resistance, do not have resistance to an alkaline aqueous solution having a high concentration, as in the ceramic membranes, and separation membranes composed of polyethylene or polypropylene have insufficient physical strength, which is a problem.

Furthermore, an apparatus in which heated oil-containing wastewater is subjected to separation treatment without decreasing the temperature is required to have heat resistance and resistance to a heat cycle in which low temperature during the stop period and high temperature during the heating period are periodically repeated, and the oil-containing wastewater treatment apparatus is installed, for example, in cold climates where the difference between low and high temperatures is 100°C or more.
However, in filtration membranes composed of resins which have been widely used for oil-water separation treatment, heat resistance is not satisfactory.
For example, in PP, PE, or PVDE, when oil-containing wastewater constantly heated at 60°C or higher is supplied, the resin is softened, resulting in a change in pore size, and in PE, breakage easily occurs.
Furthermore, as a conventionally used high-temperature oil-water separation device, there is a case where the device is composed of a ceramic powder sintered body. In this case, although high heat resistance is exhibited, problems exist, such as an increase in weight, and cracks and the like easily occur because of thermal damage during temperature change in the heat cycle.
Furthermore, in the conventional apparatus provided with a ceramic separation device, since the membrane element volume per membrane area is large, a large installation area is required. Therefore, there may be a case where a multi-stage membrane device is used. In this case, the weight of the entire apparatus is large, the apparatus is large-sized, and it is difficult to remove the filtration device at the time of cleaning or for the purpose of investigation, which is a problem.

The present invention has been achieved in view of the problems described above. It is an object of the present invention to provide high filtration performance with respect to oil-containing wastewater, to provide resistance to an alkali that is effective for removing water-insoluble oil so that repeated regeneration is possible, and to provide high heat resistance so that high performance filtration can be continued over a long period of time.

### Solution to Problem

In order to solve the problems, a first invention provides a separation membrane module for oil-containing wastewater treatment, which separates water-insoluble oil from oil-containing wastewater that has high turbidity and/or high temperature. The separation membrane module for oil-containing wastewater treatment is characterized by using a hollow fiber membrane which is composed of an alkali-resistant porous membrane selected from polytetrafluoroethylene (PTFE), polysulfone (PSF), and polyether sulfone (PES) and which has a tensile strength of 30 N or more. The hollow fiber membrane has a heat distortion temperature of 100°C or higher. An end-sealing member of the hollow fiber membrane is composed of a thermosetting resin having a heat distortion temperature of 100°C or higher or a hot-melt resin having a melting point that is 1.5 times or more the operating temperature.

The present inventors have found that, in the case where water-insoluble oil is separated from high-turbidity, high-temperature oil-containing wastewater, a separation membrane module using a hollow fiber membrane or a flat membrane of a porous separation membrane selected from polytetrafluoroethylene (PTFE), polysulfone (PSF), and polyether sulfone (PES) has excellent water-insoluble oil removing performance and chemical resistance, in particular, alkali resistance, and also has durability (operational period in which good filtration performance is exhibited). As a result, while achieving high-performance filtration in which the water-insoluble oil content can be decreased to less than 5 mg/L, and further to a low concentration of less than 1 mg/L, the water-insoluble oil adhering to the surface of the membrane can be dissolved and removed by chemical cleaning using an alkaline aqueous solution, and repeated regeneration is possible. Thus, high-performance filtration can be continued over a long period of time.

Polytetrafluoroethylene (PTFE), polysulfone (PSF), or polyether sulfone (PES) constituting the filtration membrane has a strength, in terms of tensile strength, of 30 N or more at 25°C. Consequently, even if filtration is performed repeatedly using a high-concentration alkaline cleaning liquid, filtration performance and strength do not decrease, and high-performance filtration can be continued over a long period of time. The tensile strength is preferably 50 N or more, and the upper limit thereof is about 150 N.
Note that the tensile strength was determined in accordance with JIS K 7161, and a hollow fiber membrane itself was used as a specimen. In the testing, measurement was performed at a tension speed of 100 mm/min and a distance between gauge lines of 50 mm.

Furthermore, polytetrafluoroethylene (PTFE), polysulfone (PSF), or polyether sulfone (PES) constituting the filtration membrane has a heat distortion temperature of 100°C or higher. Specifically, the heat distortion temperature is 121°C for PTFE, 181°C for PSF, and 210°C for PES. Regarding the heat distortion temperature, the membrane can be selected depending on the temperature of oil-containing wastewater to be treated.
Furthermore, the end-sealing member of the filtration membrane is composed of a resin having a heat distortion temperature of 100°C or higher, as in the constituent material of the filtration membrane, or a fluorocarbon resin which is a hot-melt resin having high heat-resistant temperature.
Since the filtration membrane and the end-sealing member have heat resistance as described above, it is possible to produce a filtration membrane for heated oil-containing wastewater in which heat deterioration does not easily occur even if used over a long period of time.

Preferably, the oil-containing wastewater to be filtered with the filtration membrane contains water-insoluble oil having a kinematic viscosity of 1 to 600 cSt at 40°C and a density of 0.7 to 1.0 g/cm³ at 15°C. When the oil-containing wastewater is filtered at 60°C to 200°C, preferably at 100°C to 200°C, the viscosity of the water-insoluble oil is decreased, thus enabling filtration.
The case where the water-insoluble oil has a viscosity of 0.1 to 5.0 mPa·s at 20°C can also be suitably used. The oil content in treated water subjected to filtration with the filtration membrane is set at 10 to 0.1 mg/L. On the other hand, in the case where the temperature of wastewater is high at 100°C or the like, since the viscosity decreases, even water-insoluble oil having a higher viscosity at ambient temperature can be filtered.

The reason for setting the kinematic viscosity or the viscosity of the oil-containing wastewater to be treated with the separation membrane module for oil-containing wastewater treatment of the present invention in the range described above is that if the range is exceeded, adhesion to the porous material increases, and irreversible clogging of the membrane occurs, resulting in a difficulty in securing a sufficient amount of treated water. On the other hand, if less than the range, fine particles of water-insoluble oil do not easily bind together, and coarsening or particle formation does not easily occur.
The water-insoluble oil contained in the oil-containing wastewater is not particularly limited as long as the viscosity range described above is satisfied and the water-insoluble oil is a water-insoluble substance which is separated from water and forms particles in water. Examples thereof include mainly petroleum-based hydrocarbon solvents, such as naphtha.
Regarding the oil-containing wastewater, preferably floating oil or the like that can be separated by weight separation or the like is removed in advance as will be described later, the water-insoluble oil content is adjusted to 10 to 2,000 mg/L, and the water-insoluble oil is present in the form of dispersed oil in water, as fine particles with a particle size in the micron to submicron order.
Note that the viscosity of the water-insoluble oil is measured at 20°C using a rheometer manufactured by EKO Instruments Co., Ltd.

Preferably, the oil-containing wastewater to be filtered with the filtration membrane is oil-containing wastewater having a suspended solid concentration of 5 to 20,000 mg/L, in particular, high-turbidity oil-containing wastewater having a suspended solid concentration of 100 mmg/L or more.

As described above, preferably, the oil-containing wastewater to be filtered with the filtration membrane is heated high-temperature oil-containing wastewater the temperature of which is 60°C to 200°C. In the present invention, depending on the temperature of oil-containing wastewater, the filtration membrane and the end-sealing member each have a heat-resistant temperature that does not cause heat distortion at the temperature of oil-containing wastewater.

The hollow fiber membrane may be any one of a single layer, a porous double layer including a support layer and a filtration layer stacked at least on the outer side of the support layer, and an asymmetric filtration membrane.
Preferably, the filtration membrane has a mean pore diameter of 0.01 to 1 µm.

Preferably, the hollow fiber membrane overall has an inside diameter of 0.3 to 12 mm, an outside diameter of 0.8 to 14 mm, a bubble point of 50 to 400 kPa, a thickness of 0.2 to 1 mm, a porosity of 30% to 90%, and a pressure resistance, in terms of maximum permissible transmembrane differential pressure, of 0.1 to 1.0 MPa.

The bubble point was determined, in the same manner as that described above, by the method in accordance with JIS K 3832 using isopropyl alcohol (IPA), and the hollow fiber membrane itself was used as a specimen.
The porosity of the hollow fiber membrane was determined by the Archimedes method. In the calculation, the specific gravity of PTFE was considered as 2.17. Regarding the measurement of the maximum permissible transmembrane differential pressure, in the case of internal pressure filtration type, after the pressure-applying surface was made non-porous by applying silicone grease or the like to the surface of a hollow fiber membrane, an internal pressure was applied using, as a medium, water in which 1,500 mg/l of iron hydroxide particles were dispersed. The difference in pressure between the primary side and the secondary side of the membrane was measured every 10 kPa within the range in which the size of the membrane did not substantially change before and after pressure application.
In the case of external pressure filtration type, both ends of a hollow fiber membrane were fixed in a constrained state at a predetermined length such that water permeated into the inside of the tube was able to be extracted from the both ends, with silicone grease being applied onto the outer surface of the tube, the hollow fiber membrane was placed in a sealed housing, and hydraulic pressure was applied thereto. Then, after the tube released the applied pressure, the maximum pressure at the time when the outside diameter returned to the level before pressure application was measured every 10 kPa.

The hollow fiber membrane may be either a single-layer or double-layer hollow fiber membrane as long as it exhibits alkali resistance and has the bubble point, porosity, and maximum permissible transmembrane differential pressure described above. The hollow fiber membrane is preferably composed of porous stretched PTFE in view of alkali resistance and excellent strength and durability.

Preferably, the hollow fiber membrane has a tensile strength of 30 to 150 N at 25°C and an IPA bubble point of 50 to 400 kPa.
The reason for setting the IPA bubble point of the hollow fiber membrane at 50 to 400 kPa is that, at less than 50 kPa, since the pore size is too large, liquid water-insoluble oil passes through pores of the porous membrane, and it is not possible to obtain treated water having a water-insoluble oil content of less than 5 mg/L. On the other hand, at more than 400 kPa, since the pore size is too small, it becomes difficult to ensure the amount of treated water; and because of poor permeability with respect to a cleaning liquid used for chemical cleaning of the membrane, cleaning recoverability is poor.
The lower limit of the IPA bubble point is preferably 80 kPa or more, and more preferably 100 kPa or more, and the upper limit is preferably 380 kPa or less, and more preferably 350 kPa or less.
Note that the IPA bubble point was determined by the method in accordance with JIS K 3832 using isopropyl alcohol (IPA), and the hollow fiber membrane itself was used as a specimen.

As the hollow fiber membrane, a porous double-layer hollow fiber membrane, in which a porous stretched PTFE sheet serving as a filtration layer is wound around a porous stretched PTFE tube serving as a support layer, is suitably used.
In the PTFE porous double-layer hollow fiber membrane, the reason for forming the filtration layer which is an outer layer so as to have a sheet-wound structure is that a porous sheet is easily subjected to uniaxial stretching and biaxial stretching, the shape, size, and the like of pores in the surface can be easily adjusted, and stacking is facilitated in the form of a thin film. By using an extruded tube as the support layer which is an inner layer, formability is good, the layer has a certain thickness and is easily provided with sufficient strength, and the porosity can be easily increased.

The support layer and the filtration layer are each stretched at least in the uniaxial direction. Stretching may be performed in an axial direction, in a circumferential direction, in a radial direction, or the like of the tube, and may be performed uniaxially in the axial direction or the like, or biaxially in the axial direction and the circumferential direction, or the like. The stretch magnification can be appropriately set. In the case of an extruded tube, the stretch magnification can be 50% to 700% in the axial direction and 5% to 100% in the circumferential direction. In the case of a porous sheet, the stretch magnification can be 50% to 1,000% in the longitudinal direction and 50% to 2,500% in the lateral direction. In particular, in the case where a porous stretched PTFE sheet is used, stretching in the lateral direction is easily performed. Therefore, when the sheet is wound in a tube shape, the strength in the circumferential direction can be improved, and it is possible to improve durability against shaking of the membrane due to diffusion of air or the like, and pressure load due to backwashing.
Furthermore, the support layer composed of a porous stretched PTFE tube and the filtration layer are integrated with each other, and pores of the support layer and pores of the filtration layer three-dimensionally communicate with each other. Therefore, good permeability can be obtained.

The mean maximum length of pores present in large amount in the outer periphery of the filtration layer is set smaller than the mean maximum length of pores present in large amount in the support layer and surrounded by the fibrous skeleton. Specifically, the mean length of pores in the filtration layer is preferably 1% to 30% of the mean length of pores in the support layer, and more preferably as small as possible. Thereby, it is possible to enhance permeability from the outer periphery side to the inner periphery side.

In the outer surface of the filtration layer, preferably, the areal occupation ratio of the pores relative to the entire surface area of the outer surface is 30% to 90% when measured by image processing. When the areal occupation ratio of the pores is high to a certain degree, even if the maximum length of the pores is small, it is possible to efficiently improve the filtration performance without decreasing the flow rate.

Specifically, preferably, the porosity of the filtration layer is 30% to 80%, and the porosity of the support layer is 50% to 85%. Thereby, while being balanced against strength, the permeability from the outer periphery side to the inner periphery side of the hollow fiber membrane can be further enhanced. When the porosity is excessively small, the flow rate is liable to decrease. When the porosity is excessively large, the strength is liable to decrease.

The thickness of the filtration layer is preferably 5 to 100 µm. The reason for this is that if the thickness is smaller than the range, formation of the filtration layer is difficult, and that even if the thickness is larger than the range, it is hard to expect improvement in the filtration performance. The thickness of the support layer is preferably 0.1 to 5 mm. Thereby, satisfactory strength can be obtained in all of the axial, radial, and circumferential directions, and it is possible to improve durability against internal and external pressures, bending, and the like. The inside diameter of the support layer is preferably 0.3 to 12 mm.

The separation membrane module for oil-containing wastewater treatment according to the present invention may be of any type selected from an external pressure type, an external pressure circulation type, an internal pressure type, an internal pressure circulation type, and an immersion type.
Specifically, a plurality of the hollow fiber membranes are formed into an assembly, and the assembly is housed in an inside of an external cylinder. An external pressure filtration type or external pressure circulation filtration type module is formed in which each hollow fiber membrane has an open end and a closed end; and the module includes an inlet portion for introducing the oil-containing wastewater into the inside of the external cylinder, an outlet portion for a filtered, treated liquid, the outlet portion communicating with the open end of each hollow fiber membrane, and a discharge portion for a non-filtered liquid that has not been filtered, the discharge portion communicating with the external cylinder.
Alternatively, an internal pressure filtration type or internal pressure circulation filtration type module is formed in which each hollow fiber membrane has two open ends; and the module includes an inlet portion for introducing the oil-containing wastewater into one of the open ends of each hollow fiber membrane, a discharge portion for discharging a non-filtered liquid that has not been filtered from the other open end, and an outlet portion for a filtered, treated liquid, the outlet portion communicating with the inside of the external cylinder.
In the case of an immersion filtration type module, a plurality of the hollow fiber membranes are formed into an assembly, the assembly is placed in an immersion tank with the oil-containing wastewater, each hollow fiber membrane has an open end and a closed end, and the module includes an outlet portion for a filtered, treated liquid, the outlet portion communicating with the open end of each hollow fiber membrane.

The hollow fiber membranes used for the external pressure filtration type or external pressure circulation filtration type module preferably have an outside diameter of 1 to 5 mm, an inside diameter of 0.5 to 4 mm, and a porosity of 30% to 90%.
The hollow fiber membranes used for the internal pressure filtration type or internal pressure circulation type module preferably have an outside diameter of 1.3 to 20 mm, an inside diameter of 1 to 10 mm, and a porosity of 30% to 90%.

The assembly of hollow fiber membranes includes as many as about 500 to 8,000 hollow fiber membranes having good chemical resistance and filtration performance with respect to water-insoluble oil.
Preferably, the hollow fiber membrane filling factor in the assembly is about 20% to 60% so that the distance between adjacent hollow fibers is increased and the flow channel of oil-containing wastewater can be secured.
In the case where the separation membrane module is of external pressure filtration type in which oil-containing wastewater is passed through from the outside toward the inside of the hollow fiber membrane or of external pressure circulation type in which non-filtered oil-containing wastewater is recirculated through the separation membrane module, the fouling on the surface of the hollow fiber membrane can be swept away by means of flow of liquid to be treated. Consequently, even if the water-insoluble oil content and the suspended solid concentration in the liquid to be treated are high, filtration can be continued while suppressing fouling on the membrane surface and clogging. In the case where liquid filtration is easily performed and clogging is hard to occur, an external pressure all filtration type module in which the liquid to be treated is not circulated may be used.
On the other hand, in the case where particles in raw water are sufficiently large compared with the pore diameter of the support layer, or the like, an internal pressure filtration type module in which treated water is passed through from the inside toward the outside of the hollow fiber membrane, or an internal pressure circulation filtration type module may be used.

In the case where oil-containing wastewater to be treated has high turbidity and high temperature, preferably, the shortest distance between outer peripheries of adjacent hollow fiber membranes in the assembly is set to be relatively large, i.e., 0.5 to 5 mm. Furthermore, preferably, the filling factor of the hollow fiber membranes relative to the cross-sectional area of the assembly is 20% to 60%.
In such a manner, by maintaining a relatively large distance between adjacent hollow fiber membranes, high-turbidity oil-containing wastewater can be made to flow while suppressing occurrence of clogging between hollow fiber membranes.

In the present invention, as will be described later, in order to clean the hollow fiber membranes with an alkaline aqueous solution, members other than the hollow fiber membranes, such as a fixing member, a water collecting header, a sealing resin, an inlet pipe for liquid to be treated, and an external cylinder, are also made of an alkali-resistant resin.
Specifically, regarding a sealing member which closes one open end of each of the hollow fiber membranes and fixes the hollow fiber membranes as an assembly and a fixing member which fixes the hollow fiber membranes with the other open end of each of the hollow fiber membranes being in an open state, a thermosetting resin, such as en epoxy resin, a polyurethane resin, a silicone resin (rubber), or an unsaturated polyester resin, or a thermoplastic resin, such as a polyolefin resin or a fluorocarbon resin, is used.
The external cylinder is preferably formed of a metal material, such as stainless steel, or an engineering plastic, such as an ABS resin, PVC, FRP, PTFE, PSF, PES, or PEEK.
Pipes, accessories thereof, and the like are similarly composed of stainless steel, PVC, or the like.
The members constituting the hollow fiber membrane module have heat resistance with a heat distortion temperature of 100°C or higher in the case of a thermosetting resin, or have a melting point that is 1.5 times the operating temperature in the case of a hot-melt resin.

Furthermore, in the separation membrane module of the present invention, preferably, an air diffusion pipe is disposed at the lower portion of the assembly of the hollow fiber membranes arranged in a vertical direction, and the separation membrane preferably includes backwashing means which sends under pressure a treated liquid as a backwashing liquid into the hollow fiber membranes from the outlet portion of the treated liquid.
By providing the air diffusion pipe, during the ordinary filtration operation, bubbling of diffusion air can be generated from the lower part of the separation membrane module or from a pipe connected to the lower portion of the module to vibrate the hollow fiber membranes, and thereby fine particles adhering to the outer surfaces of the hollow fiber membranes can be shaken off.
Furthermore, by periodically sending under pressure a treated liquid as a backwashing liquid into the hollow fiber membranes of the separation membrane module to perform backwashing, the filtration performance can be maintained.

A second invention provides an oil-containing wastewater treatment method using the separation membrane module for oil-containing wastewater treatment. The oil-containing wastewater treatment method is characterized in that oil-containing wastewater having a water-insoluble oil content (n-hexane value) of 3 to 5,000 mg/L is treated under filtration conditions in which the transmembrane differential pressure is 50 kPa or less when the IPA bubble point of the hollow fiber membrane is 50 kPa or more and less than 100 kPa, the transmembrane differential pressure is 100 kPa or less when the IPA bubble point is 100 kPa or more and less than 150 kPa, and the transmembrane differential pressure is 200 kPa or less when the IPA bubble point is 150 kPa or more and 400 kPa or less; and the water-insoluble oil content in filtration treated water is less than 5 mg/L in the case where the water-insoluble oil content in oil-containing wastewater is 10 mg/L or more and 2,000 mg/L or less, and the water-insoluble oil content in filtration treated water is less than 1 mg/L in the case where the water-insoluble oil content in oil-containing wastewater is 3 mg/L or more and less than 10 mg/L.

In this treatment method, by maintaining balance between the IPA bubble point of the hollow fiber membrane and the transmembrane differential pressure, water-insoluble oil does not pass through pores of the porous membrane of the hollow fiber membrane, and an adjustment is made such that water-insoluble oil can be efficiently removed from oil-containing wastewater.
In each of the IPA bubble point conditions of the hollow fiber membrane, when the specified upper limit of the transmembrane differential pressure is exceeded, water-insoluble oil becomes to easily pass through pores of the porous membrane, and it becomes hard to obtain a water-insoluble oil content of less than 5 mg/L or less than 1 mg/L, which is undesirable.
Preferably, the transmembrane differential pressure is 50 kPa or less when the IPA bubble point of the hollow fiber membrane is 50 kPa or more and less than 100 kPa.
Preferably, the transmembrane differential pressure is 100 kPa or less when the IPA bubble point is 100 kPa or more and less than 150 kPa.
Preferably, the transmembrane differential pressure is 200 kPa or less when the IPA bubble point is 150 kPa or more and 400 kPa or less.
Although it is desirable to maintain the lower limit as low as possible, the differential pressure gradually increases as filtration continues. It is desirable to perform chemical cleaning using an alkaline aqueous solution or the like at the time when the pressure increases to reach the value described above.
Note that the transmembrane differential pressure is determined by a method in which pressure P1 of raw water at the inlet closest to the separation membrane module in operation and pressure P2 of permeated water closest to the module outlet are measured, and from the measured values, (P1 - P2) is calculated.

In this treatment method, the reason for setting the water-insoluble oil content (n-hexane value) in oil-containing wastewater to be treated by the filtration membrane at 3 to 2,000 mg/L is that at more than 2,000 mg/L, the water-insoluble oil content becomes excessively large, and clogging or the like of the hollow fiber membrane easily occurs, resulting in a difficulty in securing the amount of treated water.
On the other hand, at less than 3 mg/L, in the case where the water-insoluble oil is dispersed as fine particles, fine particles do not easily associate with each other and coarsening does not easily occur inside the membrane. Therefore, fine particles cannot be stably collected and cannot be removed reliably.
The water-insoluble oil content in oil-containing wastewater to be treated by this treatment method is preferably 10 to 2,000 mg/L, and particularly preferably 20 to 1,000 mg/L.
In the case where the water-insoluble oil content in oil-containing wastewater is low, specifically, at less than 30 mg/L, the separation membrane module for oil-containing wastewater treatment according to the present invention can decrease by treatment the water-insoluble oil content to 5 mg/L or less as a matter of course, and further to less than 1 mg/L.
The water-insoluble oil content is determined by the n-hexane value measured by the method according to JIS K 0102 24.2.

When the concentration of suspended solids (SS) measured according to JIS K 0102 14.1 in the oil-containing wastewater is 5 to 2,000 mg/L, the oil-containing wastewater usually contains suspended solids and is a heterogeneous system in a dispersed state. Note that the temperature of oil-containing wastewater to be treated is usually about 25°C to 90°C.

Furthermore, in the oil-containing waste water treatment method of the present invention, in the case where the water-insoluble oil content in oil-containing wastewater is 3 to 200 mg/L and the concentration of suspended solids (SS) is 100 mg/L or less, it is preferable to perform external pressure-type all filtration in which all of liquid to be treated is passed through the hollow fiber membrane.
In the case where the water-insoluble oil content is more than 200 mg/L and 2,000 mg/L or less and the suspended solid (SS) concentration is 100 to 20,000 mg/L, it is preferable to perform an external pressure circulation-type or internal pressure circulation-type cross-flow filtration in which the liquid to be treated is made to flow in a circulatory manner.
In particular, in the case where the water-insoluble oil content is 1,000 mg/L or more or the suspended solid concentration is 500 mg/L or more, it is preferable to perform circulation filtration.
By changing the treatment method depending on the water-insoluble oil content or the concentration of suspended solids in such a manner, treatment can be performed efficiently, and the amount of treated water can be secured.

The oil-containing wastewater treatment method described above can be used in the case where, after oil-field wastewater is subjected to pretreatment to reduce the water-insoluble oil content (n-hexane value), oil-containing wastewater is subjected to microfiltration with the separation membrane module.

Furthermore, there is provided an oil-containing wastewater treatment method using the separation membrane module for oil-containing wastewater treatment, in which, in the case where oil-containing wastewater has an oil content of 20 to 2,000 mg/L, a suspended component content of 100 to 10,000 mg/L, and a high temperature of 60°C to 200°C, the high-temperature oil-containing wastewater is subjected to filtration treatment with the separation membrane module such that the water-insoluble oil content is 5 mg/L or less and the suspended component content is 0 to 1 mg/L in treated water.

Furthermore, a third invention provides an oil-containing wastewater treatment apparatus provided with the separation membrane module for oil-containing wastewater treatment.
The oil-containing wastewater treatment apparatus is characterized by including cleaning means which sends a cleaning liquid composed of an alkaline aqueous solution to the surface of the hollow fiber membrane in order to remove water-insoluble oil adhering to the surface of the hollow fiber membrane of the separation membrane module.

In the separation membrane module for oil-containing wastewater treatment used in the present invention, the hollow fiber membrane is composed of PTFE or the like and has excellent alkali resistance. Therefore, even if a cleaning liquid of high-concentration alkaline solution, such as 4% by mass aqueous sodium hydroxide solution (1 mol/L), is sent to the hollow fiber membrane, the hollow fiber membrane is not damaged, and high filtration performance can be maintained. Consequently, trapped water-insoluble oil adhering to the surface can be adequately dissolved and removed, and the porous membrane can be repeatedly regenerated and reused.

Preferably, the oil-containing wastewater treatment apparatus of the present invention includes an oil-containing wastewater storage tank, a cleaning liquid storage tank of the cleaning means, an inlet pipe through which each of the oil-containing wastewater storage tank and the cleaning liquid storage tank communicates with the inlet portion of the separation membrane module and which is inserted with a pump, and a circulation pipe through which each of the oil-containing wastewater storage tank and the cleaning liquid storage tank communicates with the discharge portion for untreated liquid of the separation module, and branch pipes of the inlet pipe and branch pipes of the circulation pipe are configured to communicate with the oil-containing wastewater storage tank and the cleaning liquid storage tank.

As described above, by providing a circulation pipe between the oil-containing wastewater storage tank and the separation membrane module, oil-containing wastewater which is a liquid to be treated is supplied to the separation membrane module in a circulatory manner to perform filtration. Furthermore, by providing a circulation pipe between the cleaning liquid storage tank which stores a cleaning liquid composed of an alkaline aqueous solution and the separation membrane module, the cleaning liquid is supplied to the separation membrane module in a circulatory manner.
The circulation of the liquid to be treated and the circulation of the cleaning liquid are alternately performed, thereby preventing a degradation in filtration performance of the separation membrane module.

Preferably, the discharge pressure of the pump inserted in the inlet pipe is 50 to 300 kPa. Furthermore, a switching valve is provided at the branch position of the branch pipe, and the liquid to be treated and the cleaning liquid are switched from one another when sent to the separation membrane module.

As described above, by using a cross-flow method in which oil-containing wastewater is circulated through the separation module, even a liquid to be treated having a water-insoluble oil content of more than 200 mg/L and 2,000 mg/L or less and a suspended solid (SS) content of 100 to 20,000 mg/L can be treated to be reduced to less than 5 mg/L, and in the case where the suspended solid (SS) content and the water-insoluble oil content are low, to be reduced to less than 1 mg/L.
Furthermore, by supplying the oil-containing wastewater at a pump discharge pressure of 50 to 300 kPa, the transmembrane differential pressure of the hollow fiber membrane having the IPA bubble point described above can be set in the range described above.
Furthermore, by providing the cleaning means, it is possible to switch the inlet pipe for oil-containing wastewater to the inlet pipe for cleaning liquid of an alkaline aqueous solution, and the trapped water-insoluble oil on the surface of the hollow fiber membrane can be periodically removed. Consequently, the filtration membrane can be easily regenerated.

The oil-containing wastewater treatment apparatus of the present invention can be suitably used as an apparatus in which after oil-field wastewater is subjected to pretreatment to reduce the water-insoluble oil content, for example, the water-insoluble oil content (n-hexane value) is reduced to 10 to 2,000 mg/L, the oil-containing wastewater is subjected to microfiltration.
Specifically, oil-field wastewater is separated into coarse water-insoluble oil and oil-containing water using existing oil-water separation treatment means, from the separated oil-containing water, coagulated water-insoluble oil and metals are roughly removed using electrical coagulation/floating means, and the resulting oil-containing wastewater, as a liquid to be treated, is subjected to microfiltration using the oil-containing wastewater treatment apparatus.

The raw water of oil-field wastewater usually contains large amounts of floating oil and the like and sludge. Therefore, after water-insoluble oil is roughly removed in advance using oil-water separation treatment means and electrical coagulation/floating means, the resulting oil-containing wastewater is subjected to microfiltration for which the apparatus of the present invention is used. In this case, the oil content is 10 to 100 mg/L.
In this constitution, since most of water-insoluble oil, such as floating oil, is removed in advance, clarified, treated water can be obtained while securing the amount of treated water. The resulting treated water can be used, for example, as irrigation water.

In the separation membrane module of hollow fiber membrane type used for high-temperature oil-containing wastewater treatment, preferably, the mean distance between adjacent hollow fiber membranes in the assembly is relatively large at 0.5 to 5 mm, and the filling factor of the hollow fiber membranes relative to the cross-sectional area of the assembly is 20% to 60%.
When the distance between adjacent hollow fiber membranes is increased in such a manner, leakage due to cracks or strain tends to occur in the end-sealing member. However, in the present invention, cracks are prevented from occurring in the end-sealing member by using the method described below as a method of fixing many hollow fiber membranes and the end-sealing member which joins and fixes at least one ends of the hollow fiber membranes.

(In the case where a thermosetting resin is used as the sealing member)
For example, a heat-resistant epoxy resin (aromatic amine curing agent) having a heat distortion temperature of 120°C or higher is injected to fill a container, and preheating is performed at 50°C to 60°C. Then, the resin is precured by being retained at ambient temperature for at least 3 hours or more, preferably 6 hours or more.
Next, heating is performed for 1 hour or more at the operating temperature or higher and 120°C (heat distortion temperature) or lower (100°C or higher and 120°C or lower when used at 100°C).
Then, cooling is performed gradually for at least 6 hours or more and at a temperature gradient of 1°C/min.
(In the case where a hot-melt resin is used as the sealing member)
Holes are made at predetermined positions of a rod, which is formed into a shape of an end portion in advance, so as to meet the size of hollow fiber membranes, and hollow fiber membranes are inserted therein and arranged with predetermined spacing. In this state, preheating is performed until the actual temperature of the end-sealing member becomes equal to or higher than the melting point of the resin, and heating is performed for 1 hour or more at the melting temperature. Then, cooling is performed for at least 6 hours or more and at a temperature gradient of 1°C/min.

In such a manner, after preheating, retention is performed for a predetermined period of time. Then, heat forming is performed, and after heating, cooling is performed gradually over a required period of time. The present inventors know by experiment that, in the hollow fiber membrane module produced by this method, even if a heat cycle with a temperature difference of about 100°C is repeated, it is possible to prevent cracks from occurring in the end-sealing member itself and between the end-sealing member and the hollow fibers.

### Advantageous Effects of Invention

As described above, by using the separation membrane module of the present invention, high-performance filtration can be achieved in which the water-insoluble oil content in oil-containing wastewater can be reduced to less than 5 mg/L, and further to a low concentration of less than 1 mg/L.

Furthermore, according to the oil-containing wastewater treatment method of the present invention, by treating oil-containing wastewater of oil-field wastewater and heated, high-temperature oil-containing wastewater using the separation membrane module, water-insoluble oil is not passed through, water-insoluble oil is efficiently removed from oil-containing wastewater, and a clarified, treated liquid can be obtained without decreasing the amount of treated water.

Furthermore, according to the oil-containing wastewater treatment apparatus of the present invention, the cleaning means that cleans the separation membrane module periodically is provided, and the water-insoluble oil adhering to the surfaces of the hollow fiber membranes is dissolved and removed by chemical cleaning using an alkaline aqueous solution, thus enabling repeated regeneration. Therefore, high-performance filtration of oil-containing wastewater can be continued over a long period of time.

In the case where the apparatus is used for treating oil-containing wastewater of oil-field wastewater, since microfiltration is performed with the separation membrane module after most of the water-insoluble oil, such as floating oil, is removed in advance, while securing a large amount of treated water, it is possible to obtain a clarified, treated liquid having a water-insoluble oil content of less than 5 mg/L, and further less than 1 mg/L when the water-insoluble oil content is low.

### Brief Description of Drawings

[Fig. 1] Figure 1 is a cross-sectional view of a separation membrane module for oil-containing wastewater treatment according to a first embodiment.
[Fig. 2] Figure 2 is an overall view showing an oil-containing wastewater treatment apparatus provided with the separation membrane module according to the first embodiment.
[Fig. 3] Figures 3(A) and 3(B) are schematic views of a porous double-layer hollow fiber membrane.
[Fig. 4] Figure 4 is a view showing a testing apparatus in Examples and Comparative Example.
[Fig. 5] Figures 5(A), 5(B), and 5(C) are graphs showing the results of Example 1, Comparative Example 1, and Example 2, respectively.
[Fig. 6] Figure 6 is a cross-sectional view of a separation membrane module for oil-containing wastewater treatment according to a second embodiment.
[Fig. 7] Figure 7 is an overall view showing an oil-containing wastewater treatment apparatus provided with the separation membrane module according to the second embodiment.
[Fig. 8] Figure 8 is a cross-sectional view of a separation membrane module for oil-containing wastewater treatment according to a third embodiment.
[Fig. 9] Figure 9 is an overall view showing an oil-containing wastewater treatment apparatus provided with the separation membrane module according to the third embodiment.
[Fig. 10] Figures 10(A) and 10(B) are cross-sectional views of a separation membrane module according to a fourth embodiment.

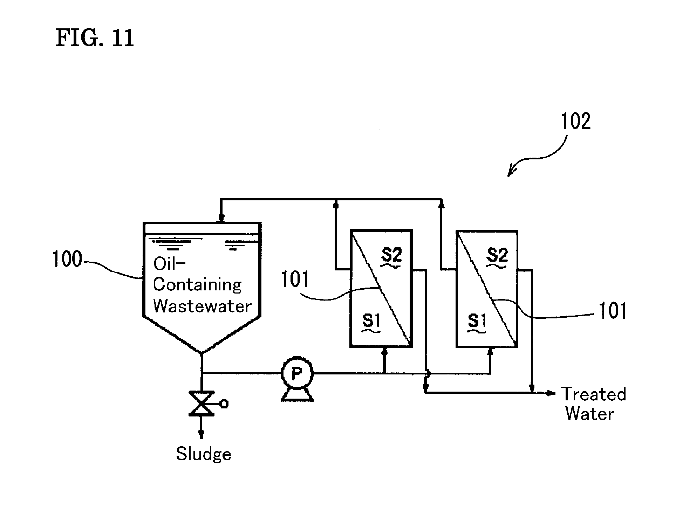

[Fig. 11] Figure 11 is a view showing a conventional example.

### Description of Embodiments

The embodiments of the present invention will be described below with reference to the drawings.

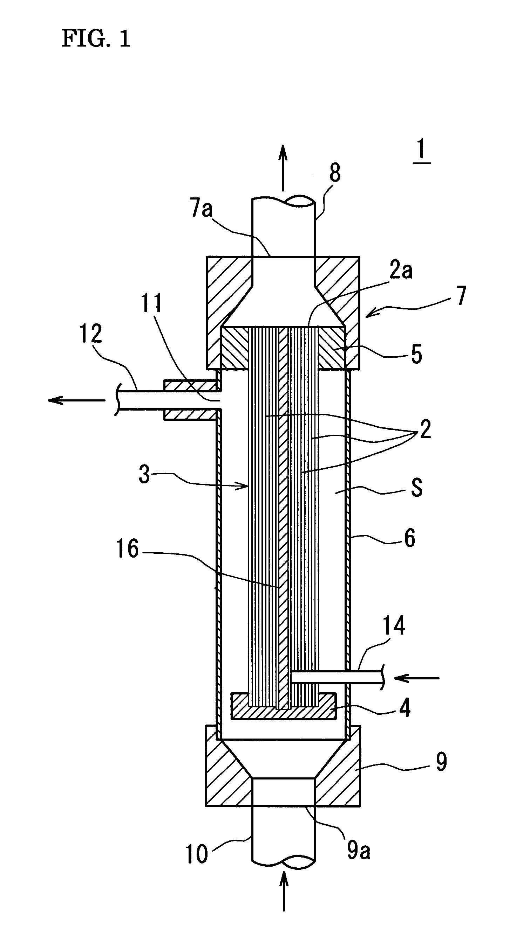

Figures 1 to 3 show a separation membrane module 1 for oil-containing wastewater treatment according to a first embodiment of the present invention.
A separation membrane module 1 according to the first embodiment is used for precisely separating oil-containing wastewater obtained by subjecting oil-field wastewater to rough separation treatment in advance. In addition, the module can be used for separating water-insoluble oil not only from the oil-field wastewater, but also from oil-containing wastewater including industrial wastewater and domestic wastewater, for example, containing water-insoluble oil having a kinematic viscosity of 1 to 600 cSt at 40°C and a density of 0.7 to 1.0 g/cm³ at 15°C. Furthermore, the module can be used for separating water-insoluble oil from oil-containing wastewater containing water-insoluble oil having a viscosity of 0.1 to 5.0 mPa·s at 20°C.
In the separation membrane module 1, treated water having a water-insoluble oil content of less than 1 mg/L can be obtained from oil-containing wastewater having a water-insoluble oil content of 3 to 2,000 mg/L.

The separation membrane module 1 is used for an external pressure circulation filtration system (external pressure cross-flow system) through which the oil-containing wastewater is passed in a circulatory manner.
The separation membrane module 1 includes an assembly 3 in which a plurality of hollow fiber membranes 2 (3,500 hollow fiber membranes in this embodiment) are gathered together, the lower end of the assembly 3 is sealed with a sealing member 4, and a lower open end of each hollow fiber membrane 2 is closed. The upper end of the assembly 3 is fixed with a fixing member 5 with an upper open end 2a of each hollow fiber membrane 2 being in an open state.
The assembly 3 is housed in an external cylinder 6. An upper cap 7 is attached by bonding to the upper end of the external cylinder 6. An outlet port 7a is provided such that the inside of the upper cap 7 communicates with the hollow portion of each hollow fiber membrane 2, and the outlet port 7a is connected to an outlet pipe 8 for taking out treated liquid.
A lower cap 9 is fixed by bonding to the lower end of the external cylinder 6. An inlet port 9a for liquid to be treated, i.e., oil-containing wastewater, is provided on the lower cap 9, and the inlet port 9a is connected to an inlet pipe 10 which introduces the liquid to be treated.
A space S is secured between the sealing member 4 at the lower end of the assembly 3 and the inner wall of the external cylinder 6 so that oil-containing wastewater introduced from the inlet port 9a can promptly flow into the assembly 3 inside the external cylinder 6.
Furthermore, a discharge port 11 for non-filtered, untreated liquid is provided at the peripheral wall in the vicinity of the upper end of the external cylinder 6, and the discharge port 11 communicates with a circulation pipe 12.

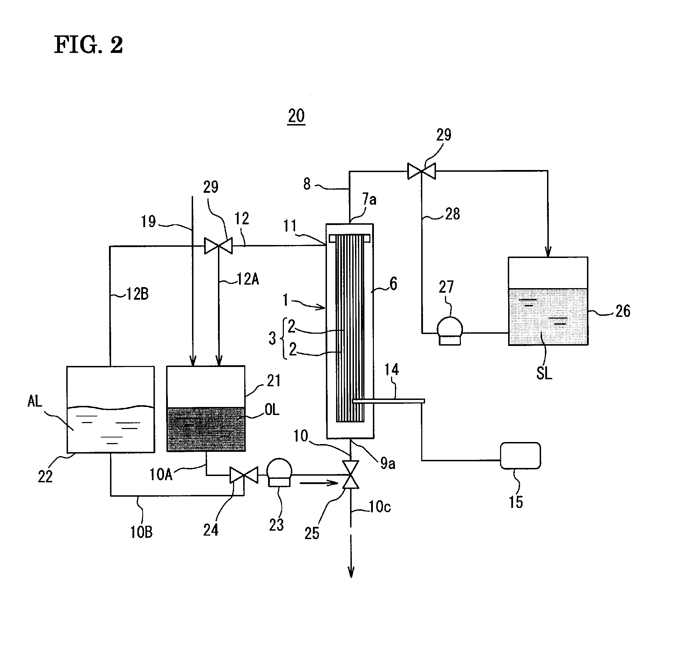

Furthermore, a diffusion air inlet pipe 14 is inserted from the lower peripheral wall of the external cylinder 6 so as to communicate with the inside of the assembly 3. As shown in Fig. 2, the diffusion air inlet pipe 14 is connected to a blower 15. A predetermined amount of air is introduced into the diffusion air inlet pipe 14 by the blower 15 when necessary, and air is diffused toward the hollow fiber membranes 2 of the assembly 3. Thereby, the hollow fiber membranes 2 are vibrated so that solids and the like contained in oil-containing wastewater adhering to the outer peripheral surfaces thereof are shaken off.

Furthermore, the upper fixing member 5 and the lower sealing member 4 are joined by a reinforcing bar 16 at the center. The reinforcing bar 16 prevents the non-rigid hollow fiber membranes 2 from being lifted by the force of stream of oil-containing wastewater from the lower part and is provided to secure verticality.
The external cylinder 6, the upper cap 7, the lower cap 9 are composed of an ABS resin, the fixing member 5 and the sealing member 4 are composed of an epoxy resin, and the joining bar 16 is composed of stainless steel or a heat-resistant resin. Thus, the entire module has good alkali resistance.

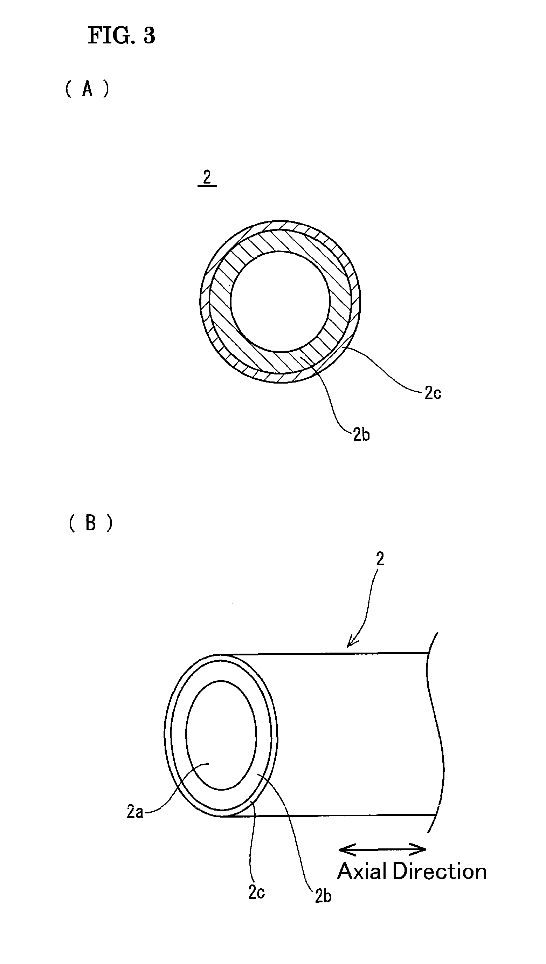

As shown in Fig. 3, the hollow fiber membrane 2 is a porous double-layer membrane including a support layer composed of a porous stretched PTFE tube 2b and a filtration layer composed of a porous stretched PTFE sheet 2c disposed on the outer surface of the support layer.
The hollow fiber membrane 2 overall has an inside diameter of 0.3 to 12 mm, an outside diameter of 0.8 to 14 mm, an SPA bubble point of 50 to 400 kPa, a thickness of 0.2 to 1 mm, a porosity of 50% to 90%, and a pressure resistance, in terms of maximum permissible transmembrane differential pressure, of 0.1 to 1.0 MPa. The tensile strength at 25°C is 30 to 150 N. These physical properties are measured by the same methods as those described above.

The hollow fiber membrane 2 which is a porous double-layer hollow fiber membrane is formed by winding the porous stretched PTFE sheet 2c around the outer peripheral surface of the porous stretched PTFE tube 2b obtained by extrusion. Specifically, irregularities are provided by flame treatment or the like on the outer peripheral surface of the porous stretched PTFE tube 2b. Then, the porous stretched PTFE sheet 2c is wound around the entire periphery without positional misalignment, and a load is applied through dies so that the both are brought into close contact with each other, followed by heat sintering at a temperature that is equal to or higher than the melting point of PTFE. Thereby, the both are integrated by fusion bonding.

An oil-containing wastewater treatment apparatus 20 provided with the separation membrane module 1 has a structure shown in Fig. 2. The apparatus 20 includes an oil-containing wastewater storage tank 21 into which oil-containing wastewater OL is continuously poured from a pipe 19, a cleaning liquid storage tank 22 which stores a cleaning liquid composed of an alkaline aqueous solution (hereinafter referred to as an "alkaline cleaning liquid") AL, the inlet pipe 10 through which each of the oil-containing wastewater storage tank 21 and the cleaning liquid storage tank 22 communicates with an inlet portion 9a for liquid to be treated of the separation membrane module 1 and which is inserted with a pump 23 and a switching valve 24, and the circulation pipe 12 through which each of the oil-containing wastewater storage tank 21 and the cleaning liquid storage tank 22 communicates with the discharge port 11 for non-filtered, untreated liquid of the separation membrane module 1.

The inlet pipe 10 is provided with the switching valve 24 on the upstream side of the pump 23, and the pipe is branched by the switching valve 24. A branch pipe 10A is connected to the oil-containing wastewater storage tank 21, and a branch pipe 10B is connected to the cleaning liquid storage tank 22. Furthermore, the inlet pipe 10 is connected to a discharge pipe 10C for backwash water through a switching valve 25 on the downstream side of the pump 23.
The circulation pipe 12 serving as a cleaning liquid path is also branched. A branch pipe 12A is connected to the oil-containing wastewater storage tank 21, and a branch pipe 12B is connected to the cleaning liquid storage tank 22. Furthermore, by inserting a switching valve 29 at the branching position, a non-filtered, untreated liquid is returned to the oil-containing wastewater storage tank 21, and the alkaline cleaning liquid is returned to the cleaning liquid storage tank 22 for circulation during alkali cleaning.

The pump 23 has a discharge pressure of 50 to 300 kPa and sends under pressure the oil-containing wastewater OL and the alkaline cleaning liquid AL to the separation membrane module 1.
By setting the discharge pressure of the pump 23 at 50 to 300 kPa, the transmembrane differential pressure of the hollow fiber membrane 2 at the IPA bubble point is adjusted.
In such a manner, in this apparatus, the alkaline cleaning liquid AL and the oil-containing wastewater OL are periodically alternately supplied to the separation membrane module 1, and the hollow fiber membranes 2 are periodically cleaned with the alkaline cleaning liquid AL.
As the alkaline cleaning liquid AL, a 0.5%-20% by mass aqueous sodium hydroxide solution is used.

The outlet pipe 8 which is connected to the outlet port 7a for filtered, treated liquid and takes out treated liquid is connected to a treated liquid storage tank 26. At the same time, since the treated liquid stored in the treated liquid storage tank 26 is used as backwash water, a backwash pipe 28 inserted with a backwash pump 27 is connected between the treated liquid storage tank 26 and the outlet pipe 8.

Next, the operation of the oil-containing wastewater treatment apparatus provided with the separation membrane module 1 will be described.
The oil-containing wastewater OL to be continuously supplied to the oil-containing wastewater storage tank 21 is oil-containing wastewater having a water-insoluble oil content (n-hexane value) of about 1,000 mg/L or less obtained by a method in which oil-field wastewater is separated into water-insoluble oil and oil-containing water using oil-water separation treatment means, and from the separated oil-containing water, water-insoluble oil and metals are coagulated and roughly removed using electrical coagulation/floating means.
The oil-containing wastewater to be filtered with the separation membrane module 1 is filtered at a temperature of 60°C to 200°C, and preferably 100°C to 200°C. In such a temperature range, the viscosity of water-insoluble oil having a kinematic viscosity of 1 to 600 cSt at 40°C is decreased, thus facilitating filtration.

Oil-containing wastewater OL from the oil-containing wastewater storage tank 21 is pressurized by the pump 23 and introduced from the inlet pipe 10 to the inlet port 9a at the lower end of the separation membrane module 1. The introduced oil-containing wastewater OL flows upward inside the external cylinder 6, and during flowing, the oil-containing wastewater OL flows into the outer peripheries of the hollow fiber membranes 2 inside the assembly 3. External pressure filtration is performed from the outer peripheries of the hollow fiber membranes 2 to hollow portions of the hollow fiber membranes 2.

A filtered, treated liquid SL passes from the hollow portions of the hollow fiber membranes 2 through the outlet port 7a at the upper end and through the outlet pipe 8, and is stored in the treated liquid storage tank 26.
On the other hand, a non-filtered, untreated liquid is discharged from the discharge port 11 to the circulation pipe 12, and is returned to the oil-containing wastewater storage tank 21 or the cleaning liquid storage tank 22 through the branch pipe 12A.

As described above, in filtering the oil-containing wastewater OL with the hollow fiber membranes 2, in the case where hollow fiber membranes 2 with an IPA bubble point of 50 kPa or more and less than 100 kPa are used, the transmembrane differential pressure is adjusted to 50 kPa or less.
In the case where hollow fiber membranes 2 with an IPA bubble point of 100 kPa or more and less than 150 kPa are used, the transmembrane differential pressure is adjusted to 100 kPa or less.
In the case where the IPA bubble point is 150 kPa or more and 200 kPa or less, the filtration condition is set at 200 kPa or less exceeding the transmembrane differential pressure.

In such a manner, by maintaining balance between the IPA bubble point of the hollow fiber membranes 2 and the transmembrane differential pressure, water-insoluble oil does not pass through pores of the hollow fiber membranes 2, water-insoluble oil can be efficiently removed from the oil-containing wastewater OL, and it is possible to obtain treated water having a water-insoluble oil content of less than 1 mg/L.

Instead of continuously supplying oil-containing wastewater OL to the oil-containing wastewater storage tank 21, oil-containing wastewater OL may be supplied intermittently. In such a case, by repeating circulation filtration for a plurality of times, filtration proceeds, and oil-containing wastewater OL becomes concentrated. When the concentration of oil-containing wastewater OL reaches, for example, about 2,000 mg/L, the remaining liquid to be treated in the oil-containing wastewater storage tank 21 may be discharged and replaced with new oil-containing wastewater OL.
Furthermore, another operating method may be used in which filtration is continuously performed while maintaining certain amounts of water-insoluble oil and solids, for example, by discharging, out of the system, concentrated wastewater containing water-insoluble oil and solids in amounts that are the same as the total amount of water-insoluble oil and solids newly poured in.

A filtration operation of oil-containing wastewater OL is performed for a certain period of time. At the time point when the treatment flow rate decreases, the pump 23 is deactuated, and the switching valve 24 is switched to the flow channel for alkali cleaning. Then, the pump 23 is actuated again to pass the alkaline cleaning liquid AL through the inlet pipe 10, and the alkaline cleaning liquid AL is introduced to the inlet port 9a of the separation membrane module 1.
The alkaline cleaning liquid AL flows into the inside of the external cylinder 6 to clean and remove the trapped water-insoluble oil adhering to and deposited on the surfaces of the hollow fiber membranes 2. The alkaline cleaning liquid AL is discharged from the discharge port 11 to the circulation pipe 12, and is circulated to the cleaning liquid storage tank 22 through the circulation pipe 12.
In such a manner, filtration of the oil-containing wastewater OL and cleaning with the alkaline cleaning liquid AL are periodically alternately performed.

Furthermore, by periodically sending under pressure the filtered treated liquid SL from the treated liquid storage tank 26 through the outlet pipe 8 to the hollow portions of the hollow fiber membranes 2, the hollow fiber membranes 2 are backwashed from the inside. The backwash water is discharged through the discharge pipe 10C by switching the switching valve 25.
In addition, instead of the filtered, treated liquid, the alkaline cleaning liquid may be used as backwash water, and may be left to stand for a short period of time, for example, for about one hour.

In the case where the water-insoluble oil content (n-hexane value) in the oil-containing wastewater OL is low at 3 to 200 mg/L and, in particular, oil-containing wastewater which has low adhesion to the membranes is treated, it is preferable to use an external pressure filtration type system in which oil-containing wastewater is supplied from the inlet port 9a and filtered by the hollow fiber membranes 2 while flowing toward the upper end side of the assembly 3, treated water from which water-insoluble oil has been removed is passed through the inner periphery side of the hollow fiber membranes 2 and discharged from the outlet port 7a to the outlet pipe 8, and all of the oil-containing wastewater OL is subjected to filtration and is not circulated.

When the external pressure filtration type system is used, for example, by operating the backwash pump 27 every 30 minutes, using filtered treated water, counter pressure (internal pressure) is applied to the hollow fiber membranes 2 inside the separation membrane module to sweep solids and the like deposited on the outer surfaces.
At the same time, by feeding air by the blower 15, the hollow fiber membranes 2 are vibrated to similarly sweep solids. Then, the liquid to be treated, which contains solids, is drained from the lower part of the separation membrane module 1. At this time, the backwash pressure is, for example, 200 kPa, the time is 30 seconds, and the amount of air is 50 L/min for 20 seconds. In the case where oil-containing wastewater has a low water-insoluble oil content as in this case, preferably, all the amount is subjected to filtration.

### EXAMPLES

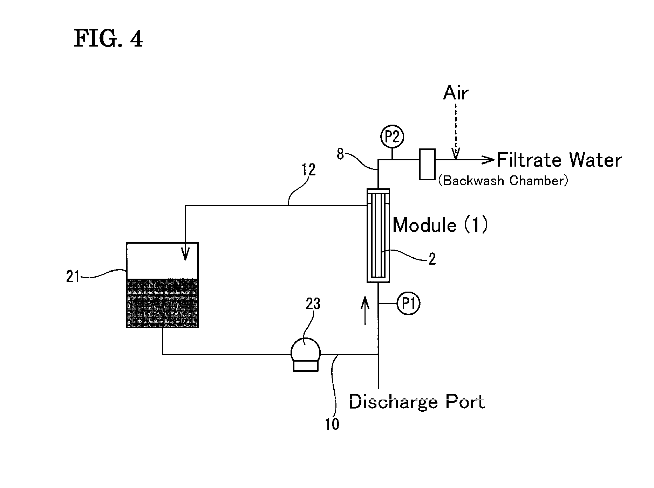

An experiment was carried out using a filtration system for testing shown in Fig. 4 in Examples 1 and 2 and Comparative Example 1. Since the filtration system shown in Fig. 4 has substantially the same structure as that of the filtration apparatus of the first embodiment, the same reference signs are used to denote the same components, and a description thereof is omitted.

### (EXAMPLE 1)

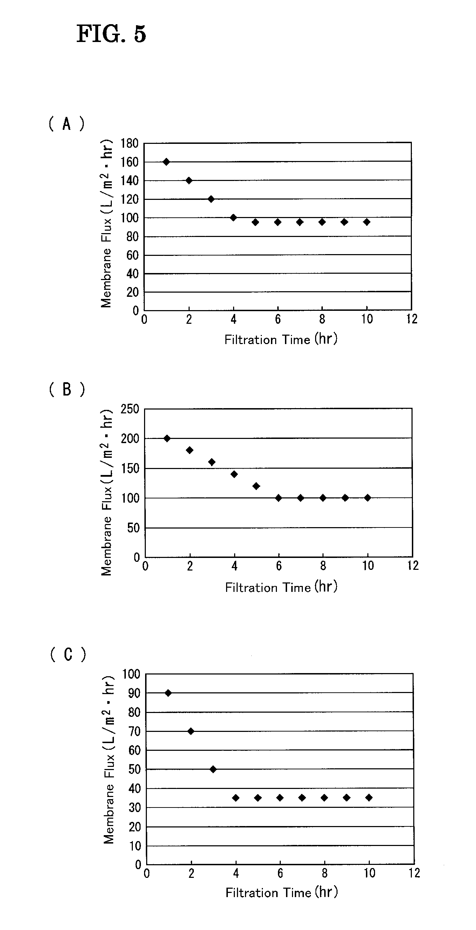

Each hollow fiber membrane was composed of PTFE hydrophilized with crosslinked PVA having an outside diameter of 2.3 mm and an inside diameter of 1.1 mm, with a bubble point of 125 kPa, a porosity of 77%, and a tensile strength of 50 to 80 N (25°C). A hollow fiber membrane module 1 with a membrane area of 0.1 m² including an end-sealing member composed of PFA was fabricated and incorporated into the filtration system shown in Fig. 4. Oil-containing wastewater (20 L) shown in Table I below was poured into an oil-containing wastewater storage tank 21 (raw water tank), and the temperature was set at 30°C.
The system was operated under the conditions shown in Table II below. As a result, as shown in Fig. 5(A), a stable filtration flow rate was shown. As for water quality, as shown in Table III, it was possible to sufficiently remove oil.

**[Table I]**

| | |
|---|---|
| Kind of water-insoluble oil: | Super 2000 10W-40 manufactured by Mobil |
| Corporation (40°C kinematic viscosity: | 92 cSt, density: 0.869 (at 15°C)) |
| Concentration | 145 mg/l |
| Suspended solids (iron hydroxide) | 173 mg/l |
| TDS (dissolved salt concentration) NaCl | 10,200 mg/l |

**[Table II]**

| | |
|---|---|
| Filtration inlet port pressure | 80 kPa |
| Filtrate outlet port pressure | 0 kPa |
| Backwash frequency: | Every 30 minutes |
| Backwash pressure: | 200 kPa |
| Load time: | 10 seconds |

**[Table III]**

| | | |
|---|---|---|
| Suspended solids: | 1> | mg/l |
| Water-insoluble oil: | 1> | mg/l |

### (COMPARATIVE EXAMPLE 1)

Each hollow fiber membrane was composed of PTFE hydrophilized with crosslinked PVA having an outside diameter of 2.3 mm and an inside diameter of 1.1 mm, with a bubble point of 55 kPa, a porosity of 80%, and a tensile strength of 40 to 60 N (25°C). A hollow fiber membrane module 1 constituted by the hollow fiber membranes with a membrane area of 0.1 m² including an end-sealing member composed of PFA was incorporated into the filtration system shown in Fig. 4. Wastewater (20 L) shown in Table IV below was poured into the raw water tank, and the temperature was set at 30°C.
The system was operated under the conditions shown in Table V below. As a result, as shown in Fig. 5(B), a stable filtration flow rate was shown. However, as for water quality, as shown in Table VI below, it was not possible to remove oil.

**[Table IV]**

| | |
|---|---|
| Kind of water-insoluble oil: | Super 2000 10W-40 manufactured by Mobil |
| Corporation (40°C kinematic viscosity: | 92 cSt, density: 0.869 (at 15°C)) |
| Concentration | 145 mg/l |
| Suspended solids (iron hydroxide) | 173 mg/l |
| TDS (dissolved salt concentration) NaCl | 10,200 mg/l |

**[Table V]**

| | |
|---|---|
| Filtration inlet port pressure | 85 kPa |
| Filtrate outlet port pressure | 0 kPa |
| Backwash frequency: | Every 30 minutes |
| Backwash pressure: | 200 kPa |
| Load time: | 10 seconds |

**[Table VI]**

| | |
|---|---|
| Suspended solids: | 2 mg/l |
| Water-insoluble oil: | 27 mg/l |

### (EXAMPLE 2)

Each hollow fiber membrane was composed of PTFE hydrophilized with crosslinked PVA having an outside diameter of 2.3 mm and an inside diameter of 1.1 mm, with a bubble point of 125 kPa, a porosity of 77%, and a tensile strength of 50 to 80 N (25°C). A hollow fiber membrane module 1 constituted by the hollow fiber membranes with a membrane area of 0.1 m² including an end-sealing member composed of PFA was incorporated into the filtration system shown in Fig. 1. Wastewater (20 L) shown in Table VII below was poured into the raw water tank, and the temperature was set at 90°C.
The system was operated under the conditions shown in Table VIII below. As a result, as shown in Fig. 5(C), a stable filtration flow rate was shown. As for water quality, as shown in Table IX below, it was possible to sufficiently remove oil.

**[Table VII]**

| | |
|---|---|
| Kind of water-insoluble oil: | Mobileagr SHC 320 manufactured by Mobil |
| Corporation (40°C kinematic viscosity: | 320 cSt, density: 0.88 (at 15°C)) |
| Concentration | 153 mg/l |
| Suspended solids (iron hydroxide) | 121 mg/l |
| TDS (dissolved salt concentration) NaCl | 10,200 mg/l |

**[Table VIII]**

| | |
|---|---|
| Filtration inlet port pressure | 80 kPa |
| Filtrate outlet port pressure | 0 kPa |
| Backwash frequency: | Every 30 minutes |
| Backwash pressure: | 200 kPa |
| Load time: | 10 seconds |

**[Table IX]**

| | | |
|---|---|---|
| Suspended solids: | 1> | mg/l |
| Water-insoluble oil: | 1> | mg/l |

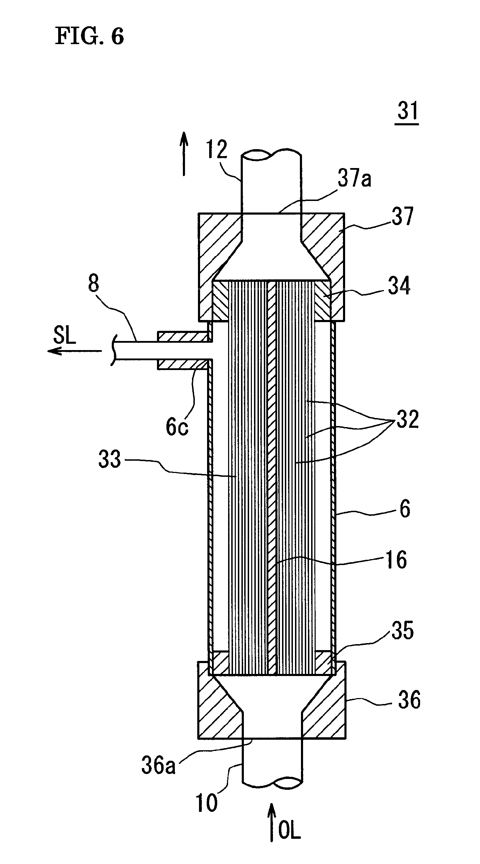

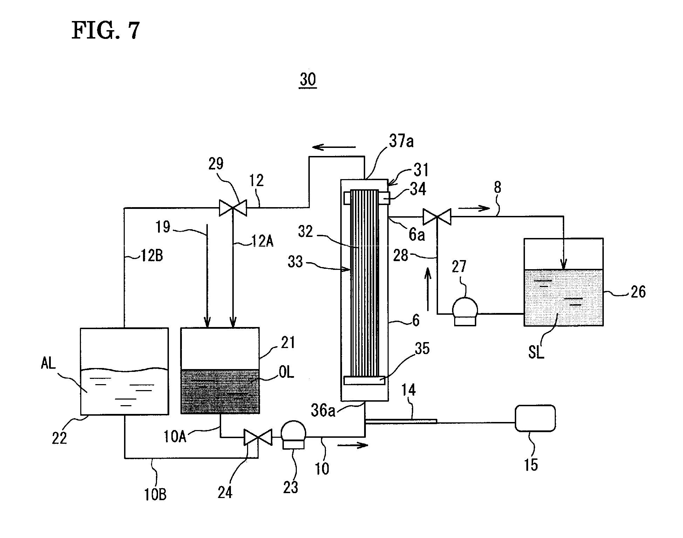

Figures 6 and 7 show an oil-containing wastewater treatment apparatus 30 of internal pressure circulation filtration type according to a second embodiment.
The oil-containing wastewater treatment apparatus 30 is used for oil-water separation for oil-containing industrial wastewater, not for oil-field wastewater. Note that the treatment apparatus 30 may be used as an oil-containing wastewater treatment apparatus for oil-field wastewater as in the first embodiment.
A separation membrane module 31 shown in Fig. 6 is an internal pressure circulation filtration type module in which each hollow fiber membrane 32 has two open ends, oil-containing wastewater OL as liquid to be treated is passed through hollow portions of the hollow fiber membranes 32, filtration is performed from the inner side toward the outer side of the hollow fiber membranes 32, and a filtered, treated liquid is passed through the outside of the hollow fiber membranes 32.

Specifically, an assembly 33 of hollow fiber membranes 32, each having two open ends, is housed in an external cylinder 6. The upper and lower ends of the assembly 33 are fixed with fixing members 34 and 35 with two open ends of each hollow fiber membrane 32 being in an open state. An upper cap 37 is attached by bonding to the upper fixing member 34, the upper cap 37 being provided with a discharge port 37a for non-filtered, untreated liquid, and the upper cap 37 and a circulation pipe 12 are connected to a discharge port 37a.
The lower fixing member 35 is closely fixed onto the internal peripheral surface of the external cylinder 6, and fixed to the lower cap 36. An inlet port 36a for liquid to be treated, i.e., oil-containing wastewater, is provided on the lower cap 36, and the inlet port 36a is connected to an inlet pipe 10.
Furthermore, an outlet port 6c for filtered, treated liquid is provided at the peripheral wall in the vicinity of the upper end of the external cylinder 6, and the outlet port 6c is connected to an outlet pipe 8 for taking out treated liquid.

In the oil-containing wastewater treatment apparatus 30 provided with the internal pressure circulation filtration type separation membrane module 31, as shown in Fig. 7, the inlet pipe 10 connected to the inlet port 36a of the separation membrane module 31 is connected to an oil-containing wastewater storage tank 21 and a cleaning liquid storage tank 22 through a pump 23, a switching valve 24, and branch pipes 10A and 10B, as in the first embodiment.
The circulation pipe 12 connected to the discharge port 37a of the separation membrane module 31 is also connected to the oil-containing wastewater storage tank 21 and the cleaning liquid storage tank 22 through branch pipes 12A and 12B, as in the first embodiment.
An outlet pipe 8 connected to the outlet port 6c for filtered, treated liquid is connected to a treated liquid storage tank 26 as in the first embodiment, and a backwash pipe 28 is connected to the outlet pipe 8 through the treated liquid storage tank 26 and a backwash pump 27. By intermittently actuating the backwash pump 27, the treated liquid is introduced, as a backwash liquid, into the inside of the external cylinder 6 and the treated liquid is ejected toward the outer peripheral surfaces of the hollow fiber membranes 32 to perform backwashing.
Furthermore, a diffusion air inlet pipe 14 connected to a blower 15 is inserted into the pipe 10 close to the inlet port 36a of the separation membrane module 31, and thereby, diffusion air is fed into the hollow fiber membranes 32.

The hollow fiber membrane 32 of the second embodiment includes a porous stretched PTFE single-layer tube as in the first embodiment shown in Fig. 3. The porous hollow fiber membrane 32 has an inside diameter of 1 to 12 mm, an outside diameter of 1.6 to 14 mm, an IPA bubble point of 50 to 400 kPa, a thickness of 0.2 to 1 mm, a porosity of 50% to 90%, and a pressure resistance, in terms of maximum permissible transmembrane differential pressure, of 0.1 to 1.0 MPa. These physical properties are measured by the same methods as those described above.

The separation membrane module 31 treats oil-containing wastewater OL having a water-insoluble oil content (n-hexane value) of 1,000 to 2,000 mg/L in a circulatory manner. The separation membrane module 31 is of internal pressure circulation filtration type, which differs from the external pressure circulation filtration type of the first embodiment.
The oil-containing wastewater OL is introduced into the hollow fiber membranes 32 from the inlet port 36a as indicated by the arrow in the drawing, and flows toward the upper end of the assembly 33. In the flow process, treated water filtered with the hollow fiber membranes 32, from which water-insoluble oil has been removed, passes through the outer peripheral side of the hollow fiber membranes 32 and guided out from the treated water outlet port 6c provided on the peripheral wall of the external cylinder 6 to the outlet pipe 8.
Non-filtered, untreated liquid containing water-insoluble oil, solids, and the like is discharged from the discharge port 37a provided in the upper cap 37 to the circulation pipe 12.
In the case of the internal pressure circulation type, even at the same circulation flow rate, since the cross-sectional area of flow path inside the separation membrane module 31 is small, the flow velocity increases. Consequently, since the effect of detaching solids and water-insoluble oil deposited on the surfaces of the hollow fiber membranes 32 increases, the internal pressure circulation type is effective, in particular, in a region having a high water-insoluble oil concentration.

In the second embodiment, oil-containing wastewater OL having a water-insoluble oil content in high concentration is used as a liquid to be treated, and a treated liquid having a water-insoluble oil content of less than 5 mg/L can be obtained by one filtration step.
Since other structures and advantages of the second embodiment are the same as those of the first embodiment, the same reference signs are used to denote the components having the same function and effect, and a description thereof is omitted.

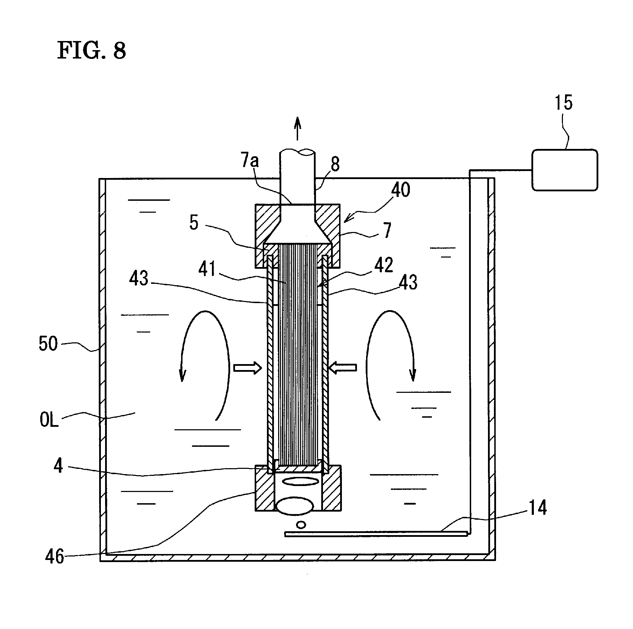

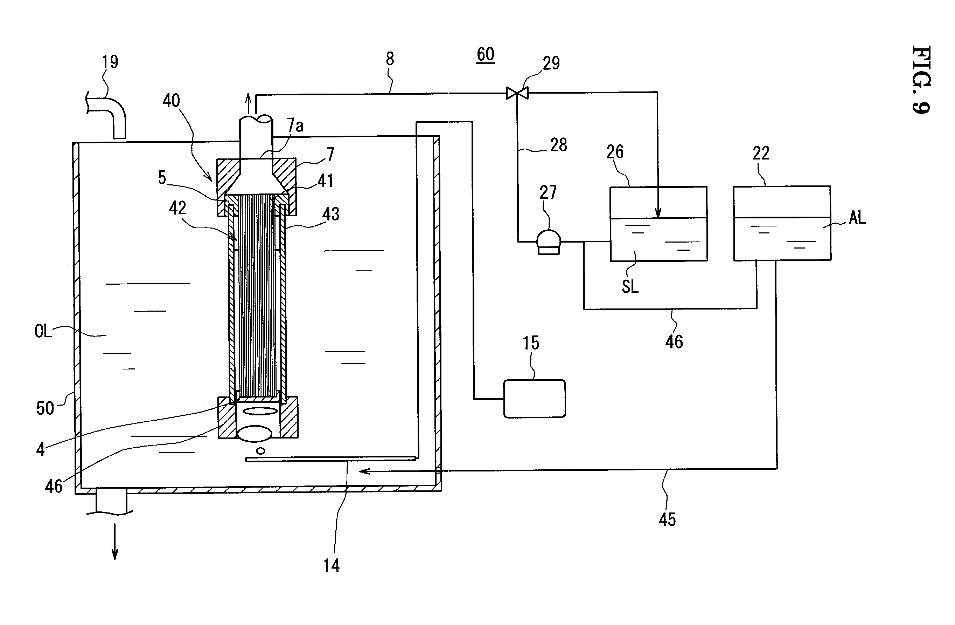

Figures 8 and 9 show a separation membrane module 40 and an oil-containing wastewater treatment apparatus 60 according to a third embodiment.
The separation membrane module 40 for oil-containing wastewater treatment is an immersion type module in which an assembly 42 of hollow fiber membranes 41 is immersed in an immersion tank 50 in which oil-containing wastewater is stored, and by drawing by suction oil-containing wastewater OL from the inside of the hollow fiber membranes 41, oil-containing wastewater OL is permeated through the hollow fiber membranes 41 from the outside toward the inside of the hollow fiber membranes 41.

The upper end of the assembly 42 of the hollow fiber membranes 41 is fixed with a fixing member 5 with an upper open end of each hollow fiber membrane being in an open state, the fixing member 5 is fixed to an upper cap 7, and the upper cap 7 is connected to an outlet pipe 8 for taking out filtered, treated liquid, as in the first embodiment.
The lower end of the assembly 42 is fixed with a sealing member 4 with a lower open end of each hollow fiber membrane 41 being in a closed state, as in the first embodiment. The fixing member 5 at the upper end and the sealing member 4 at the lower end are joined by joining bars 43 at the outer peripheral portion so that the assembly 42 is held in the vertical direction and reinforced.
The sealing member 4 at the lower end and the lower end of the joining bars 43 are fixed to a skirt member 46. An air diffusion port of a diffusion air inlet pipe 14 connected to a blower 15 is placed below the skirt member 46. During filtration operation, air is diffused from below, and the resulting bubbles cause a circulation flow upward in oil-containing OL inside the immersion tank 50.

As shown in Fig. 9, an outlet pipe 8 for taking out treated liquid is connected to a treated liquid storage tank 26 as in the first embodiment. A pipe 28 for backwashing inserted with a backwash pump 27 is connected to the treated liquid storage tank 26, and the pipe 28 is connected to the outlet pipe 8.
Furthermore, a cleaning liquid storage tank 22 in which an alkaline cleaning liquid AL is stored is ntroduced into the immersion tank 50 through a pipe 45. After oil-containing wastewater OL inside the immersion tank 50 is removed, the alkaline cleaning liquid AL is introduced into the immersion tank 50, and the assembly 42 is immersed therein for a required period of time to perform cleaning.

The hollow fiber membrane 41 of the third embodiment is a porous double-layer membrane including a support layer composed of a porous stretched PTFE tube and a filtration layer composed of a porous stretched PTFE sheet disposed on the outer surface of the support layer as in the hollow fiber membrane 2 of the first embodiment.
The hollow fiber membrane 41 has an inside diameter of 0.3 to 2.0 mm and an outside diameter of 0.8 to 3.0 mm. In the case where a support, such as a cylindrical net, is used on the inner surface, the maximum outside diameter is 20 mm.
The hollow fiber membrane 41 has an IPA bubble point of 50 to 400 kPa, a thickness of 0.2 to 1 mm, a porosity of 50% to 90%, and a pressure resistance, in terms of maximum permissible transmembrane differential pressure (external pressure), of 0.1 MPa. These physical properties are measured by the same methods as those described above. The immersion type module of the third embodiment is used for treating oil-containing wastewater having a water-insoluble oil content (n-hexane value) of 10 to 200 mg/L.

Oil-containing wastewater OL is supplied to the immersion tank 50 through a pipe 19. The supply of oil-containing wastewater OL from the pipe 19 to the immersion tank 50 is performed intermittently.
Specifically, when oil-containing wastewater OL inside the immersion tank 50 is subjected to filtration and the water-insoluble oil content in non-filtered oil-containing wastewater OL becomes 200 mg/L, the oil-containing wastewater OL is discharged out of the system from the immersion tank 50, and new oil-containing wastewater OL is supplied into the immersion tank 50.
Alternatively, when the water-insoluble oil content becomes 100 mg/L, oil-containing wastewater OL having a weak concentration is fed into the immersion tank 50. When a predetermined amount of oil-containing wastewater having a water-insoluble oil content of 100 mg/L accumulates in the immersion tank 50, discharging out of the system is performed in a short period of time.
For example, when 1,000 liter of oil-containing wastewater is fed and the water-insoluble oil content in the fed oil-containing wastewater is 5,000 mg, only 50 liter, corresponding to the water-insoluble oil content of 100 mg/L in the immersion tank 50, is discharged. By operating so as to maintain this balance, the water-insoluble oil content in the immersion tank 50 is continued to be maintained at a certain level.

In the immersion type module of the third embodiment, during the filtration operation, by constantly ejecting air from the inserted diffusion air pipe 14 to the lower portion of the assembly 42, a circulating flow which lifts up the oil-containing wastewater OL inside the immersion tank 50 is generated by bubbling of diffusion air, and the hollow fiber membranes 41 are vibrated. Thereby, water-insoluble oil and solids are made to adhere to the surfaces of the hollow fiber membranes 41 and solids and water-insoluble oil adhering to the surfaces are shaken off.
Furthermore, as described above, oil-containing wastewater is periodically discharged out of the system from the immersion tank 50. After discharging, an alkaline cleaning liquid AL is supplied to the immersion tank 50 through the pipe 45, and the assembly 42 is immersed in the alkaline cleaning liquid AL to perform cleaning. Furthermore, by actuating the backwash pump 27, a filtered, treated liquid SL is introduced, as a backwash liquid, into the inside of the hollow fiber membranes 41 to backwash the hollow fiber membranes 41.

By periodically performing cleaning as described above, trapped water-insoluble oil adhering to and deposited on the surfaces of the hollow fiber membranes 42 can be removed by the alkaline cleaning liquid AL, and the filtration performance of the hollow fiber membranes can be substantially fully recovered.
As a result, a treated liquid with a water-insoluble oil content of less than 5 mg/L, or 1 mg/L, can be continuously obtained without decreasing the amount of treated water over a long period of time, and thus the apparatus is excellent as a treatment apparatus for oil-field wastewater. The treated liquid obtained in such a manner can be used, for example, as irrigation water.
The oil-containing wastewater treatment apparatus according to the third embodiment can be used as an oil-containing wastewater treatment apparatus in any field, such as for oil-field wastewater or oil-containing industrial wastewater.

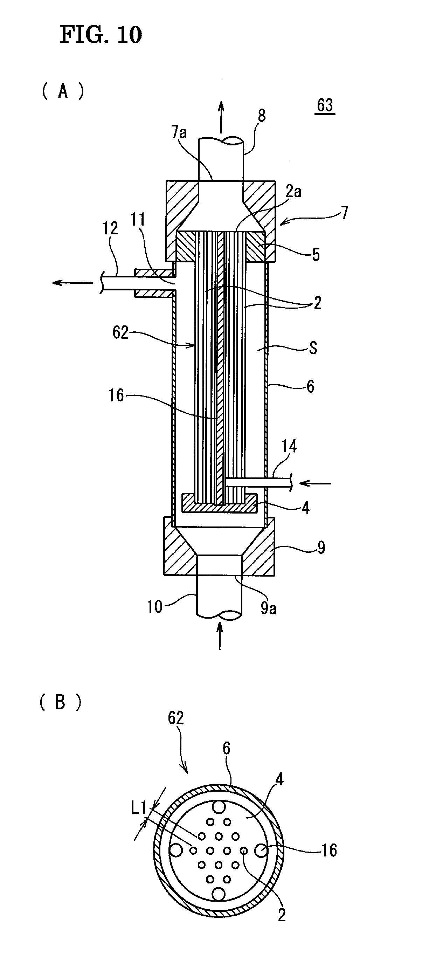

Figures 10(A) and 10(B) show a high-temperature oil-containing wastewater treatment apparatus according to a fourth embodiment.
The oil-containing wastewater to be treated has a temperature of 60°C to 200°C, an oil content of 20 to 2,000 mg/L, and a suspended component content of 100 to 10,000 mg/L. Microfiltration is performed with a filtration apparatus (oil-containing wastewater treatment apparatus) 63 provided with a separation membrane module 62.

The separation membrane module 62 of the filtration apparatus 63 uses hollow fiber membranes 2 composed of porous stretched PTFE tubes similar to those of the first embodiment. The filtration apparatus 63 has the overall structure shown in Fig. 1, and air diffusion means is also provided. The same reference signs are used to denote the same components, and a description thereof is omitted.

Each hollow fiber membrane 2 of the separation membrane module 62 may be either single layer or a double layer. When used as an external pressure filtration type or external pressure circulation filtration type module, each hollow fiber membrane 2 has an outside diameter of 1 to 5 mm, an inside diameter of 0.5 to 4 mm, and a porosity at the filtration surface of 30% to 90%, preferably 40% to 80%.
When used as internal pressure filtration type or internal pressure circulation type module, each hollow fiber membrane 2 has an outside diameter of 1.3 to 20 mm, and inside diameter of 1 to 10 mm, and a porosity at the filtration surface of 30% to 90%, preferably 40% to 80%.

Furthermore, the hollow fiber membrane 2 has a tensile strength of 30 to 150 N, and an IPA bubble point of 50 to 400 kPa.

In the separation membrane module 62 provided with an assembly 3 in which many hollow fiber membranes 2 are gathered together, as shown in Fig. 10(B), in order to allow oil-containing wastewater having relatively high viscosity to pass through, the filling area of the hollow fiber membranes relative to the cross-sectional area of the separation membrane module is 20% to 60%.
In the separation membrane module 62 of this embodiment, each of a sealing member 4 for the lower end of the assembly 3 of the hollow fiber membranes 2 and a fixing member 5 (upper-end sealing member) which seals with upper open ends being in an open state has a circular shape with a diameter of 100 to 500 mm. The distance between adjacent hollow fiber membranes 2 (separation distance between hollow fiber membranes) is increased to 0.5 to 5 mm in the case of a general-purpose hollow fiber membrane-type separation membrane module, so that the flow path of oil-containing wastewater can be secured.

The lower-end sealing member 4, the fixing member 5 (upper-end sealing member) which seals with upper open ends being in an open state, an external cylinder 6 which houses the assembly 3, an upper cap 7, and a lower cap 9 are each composed of a heat-resistant resin having a heat distortion temperature of 120°C or higher.
As the heat-resistant resin, an aromatic amine curing epoxy resin, PFA, PEF, PVDE, or the like is used. Joining bars 16 are composed of SUS. The external cylinder may be composed of a metal, such as SUS.
Furthermore, an O-ring interposed between each of the upper and lower caps 7 and 9 and the external cylinder 6 is composed of Teflon, Viton, or a combination of metal and Teflon, and thus has heat resistance.

Heated oil-containing wastewater is subjected to filtration treatment by the filtration apparatus 63 provided with the hollow fiber membrane module 62 as in the first embodiment, and treated liquid permeated through the separation membrane module 62 has a water-insoluble oil content of 5 mg/L or less and a suspended component content of 0 to 1 mg/L.
Furthermore, the hollow fiber membrane module 62 is subjected to cleaning treatment as in the first embodiment.

The separation membrane module 62 is subjected to a heat cycle in which the difference in temperature is large between the non-operation period and the operation period, and since the distance between hollow fiber membranes 2 is large, cracks easily occur in the upper and lower sealing members.
Consequently, the separation module 62 of this embodiment is fabricated by the method described below.

A plurality of hollow fiber membranes 2 are arranged in a container at predetermined spacing. In this step, as described above, the distance L1 between hollow fiber membranes is set to be relatively large at 0.5 to 5 mm.
A thermosetting resin having a heat distortion temperature of 120°C or higher is injected to fill the container, and preheating is performed at 50°C. Then, the resin is precured by being retained at ambient temperature for at least 6 hours.
Next, heating is performed for 1 hour or more at 100°C (operating temperature) or higher and 120°C (heat distortion temperature) or lower.
Then, cooling is performed gradually for at least 6 hours or more and at a temperature gradient of 1°C/min.

The present inventors have confirmed by experiment that, by fabricating the separation membrane module as described above, even if operation is performed by the heat cycle described above, occurrence of cracks can be reduced or prevented, and even if the distance between hollow fiber membranes is increased, the sealing members are not cracked.

In the heated oil-containing wastewater treatment apparatus having the structure described above, since the hollow fiber membranes are composed of heat-resistant PEFE, it is possible to prevent the hollow fiber membranes from being softened, resulting in a change in pore size, and also it is possible to prevent occurrence of breakage or cracks due to repeatedly applied thermal shock. Furthermore, it is possible to prevent cracks from easily occurring between the hollow fiber membranes and each of the upper and lower sealing members and in the sealing members themselves.
Furthermore, compared with conventionally used treatment apparatuses, the weight and size can be reduced, and no large space is required for installation. Furthermore, during cleaning and when the membrane state is investigated, the separation membrane module can be easily taken out, which is also advantageous.

The present invention is not limited to the embodiments described above. As the hollow fiber membrane, a double-layer hollow fiber membrane including a support layer and a filtration layer or an asymmetric hollow fiber membrane may be used. Alternatively, a single-layer membrane composed of a homogeneous porous tube may be used. Furthermore, an assembly may be formed in which hollow fiber membranes are bent in U-shape, and two upper ends of each hollow fiber membrane are fixed in an open state with a fixing member. Furthermore, although cleaning is preferably performed using an alkaline cleaning liquid, it may be possible to perform only backwash using a treated liquid.
The present invention can be modified in various ways within a range not exceeding the gist of the present invention.

### Industrial Applicability

In the present invention, as the liquid to be treated, the oil-field wastewater described in the embodiments is suitably used. In addition, the present invention can also be applied to treatment of industrial wastewater including cutting fluids, food wastewater including water-insoluble oil, and the like.

### Reference Signs List

1, 31, 40, 62 separation membrane module for oil-containing wastewater treatment
20, 30, 60 oil-containing wastewater treatment apparatus
2, 32, 41 hollow fiber membrane
3, 33, 42 assembly
6 external cylinder
8 outlet pipe
10 inlet pipe
12 circulation pipe
21 oil-containing wastewater storage tank
22 cleaning liquid storage tank
23 pump
26 treated liquid storage tank
OL oil-containing wastewater
AL alkaline cleaning liquid

## Claims

1. A separation membrane module for oil-containing wastewater treatment, which separates water-insoluble oil from oil-containing wastewater that has high turbidity and/or high temperature, the separation membrane module being **characterized by** using a hollow fiber membrane which is composed of an alkali-resistant porous membrane selected from polytetrafluoroethylene (PTFE), polysulfone (PSF), and polyether sulfone (PES) and which has a tensile strength of 30 N or more,
wherein the hollow fiber membrane has a heat distortion temperature of 100°C or higher; and
an end-sealing member of the hollow fiber membrane is composed of a thermosetting resin having a heat distortion temperature of 100°C or higher or a hot-melt resin having a melting point that is 1.5 times or more the operating temperature.

2. The separation membrane module for oil-containing wastewater treatment according to Claim 1, wherein the oil-containing wastewater to be filtered with the filtration membrane contains water-insoluble oil having a kinematic viscosity of 1 to 600 cSt at 40°C and a density of 0.7 to 1.0 g/cm³ at 15°C.

3. The separation membrane module for oil-containing wastewater treatment according to Claim 1, wherein the oil-containing wastewater to be filtered with the filtration membrane contains 3 to 2,000 mg/L of water-insoluble oil having a viscosity of 0.1 to 5.0 mPa·s at 20°C, and treated water filtered with the filtration membrane has an oil content of 0.1 to 10 mg/L.

4. The separation membrane module for oil-containing wastewater treatment according to any one of Claims 1 to 3, wherein the oil-containing wastewater to be filtered with the filtration membrane has a suspended solid concentration of 5 to 10,000 mg/L.

5. The separation membrane module for oil-containing wastewater treatment according to any one of Claims 1 to 4, wherein the oil-containing wastewater to be filtered with the filtration membrane has a temperature of 60°C to 200°C.

6. The separation membrane module for oil-containing wastewater treatment according to any one of Claims 1 to 5, wherein the hollow fiber membrane is any one of a single layer, a porous double layer including a support layer and a filtration layer stacked at least on the outer side of the support layer, and an asymmetric filtration membrane.

7. The separation membrane module for oil-containing wastewater treatment according to any one of Claims 1 to 6, wherein the tensile strength of the hollow fiber membrane is 30 to 150 N at 25°C and the hollow fiber membrane has an IPA bubble point of 50 to 400 kPa.

8. The separation membrane module for oil-containing wastewater treatment according to any one of Claims 1 to 7, wherein the hollow fiber membrane is a porous double-layer hollow fiber membrane in which a porous stretched PTFE sheet is wound around a porous stretched PTFE tube.

9. The separation membrane module for oil-containing wastewater treatment according to any one of Claims 1 to 8, wherein the hollow fiber membrane has a mean pore diameter of 0.01 to 1 µm.

10. The separation membrane module for oil-containing wastewater treatment according to any one of Claims 1 to 9,
wherein when a plurality of the hollow fiber membranes are formed into an assembly, and the assembly is housed in an inside of an external cylinder,
an external pressure filtration type or external pressure circulation filtration type module is formed in which each hollow fiber membrane has an open end and a closed end; and the module includes an inlet portion for introducing the oil-containing wastewater into the inside of the external cylinder, an outlet portion for a filtered, treated liquid, the outlet portion communicating with the open end of each hollow fiber membrane, and a discharge portion for a non-filtered liquid that has not been filtered, the discharge portion communicating with the external cylinder; or
an internal pressure filtration type or internal pressure circulation filtration type module is formed in which each hollow fiber membrane has two open ends; and the module includes an inlet portion for introducing the oil-containing wastewater into one of the open ends of each hollow fiber membrane, a discharge portion for discharging a non-filtered liquid that has not been filtered from the other open end, and an outlet portion for a filtered, treated liquid, the outlet portion communicating with the inside of the external cylinder; and
alternatively, wherein when a plurality of the hollow fiber membranes are formed into an assembly, and the assembly is placed in an immersion tank with the oil-containing wastewater,
an immersion filtration type module is formed in which each hollow fiber membrane has an open end and a closed end; and the module includes an outlet portion for a filtered, treated liquid, the outlet portion communicating with the open end of each hollow fiber membrane.

11. The separation membrane module for oil-containing wastewater treatment according to Claim 10, wherein the hollow fiber membranes used for the external pressure filtration type or external pressure circulation filtration type module have an outside diameter of 1 to 5 mm, an inside diameter of 0.5 to 4 mm, and a porosity of 30% to 90%; and
the hollow fiber membranes used for the internal pressure filtration type or internal pressure circulation type module have an outside diameter of 1.3 to 20 mm, an inside diameter of 1 to 10 mm, and a porosity of 30% to 90%.

12. The separation membrane module for oil-containing wastewater treatment according to Claim 10 or 11, wherein the shortest distance between outer peripheries of adjacent hollow fiber membranes is 0.5 to 5 mm.

13. The separation membrane module for oil-containing wastewater treatment according to any one of Claims 10 to 12, wherein the filling factor of the hollow fiber membranes relative to the cross-sectional area of the assembly is 20% to 60%.

14. The separation membrane module for oil-containing wastewater treatment according to any one of Claims 10 to 13, wherein an air diffusion pipe is disposed at the lower portion of the assembly of the hollow fiber membranes arranged in a vertical direction or disposed for a pipe connected to the lower portion of the external cylinder of the separation membrane module, and the separation membrane module includes backwashing means which sends under pressure a treated liquid as a backwashing liquid into the hollow fiber membranes from the outlet portion for the treated liquid.

15. An oil-containing wastewater treatment method using the separation membrane module for oil-containing wastewater treatment according to any one of Claims 1 to 14, wherein oil-containing wastewater having a water-insoluble oil content (n-hexane value) of 3 to 2,000 mg/L is treated under filtration conditions in which the transmembrane differential pressure is 50 kPa or less when the IPA bubble point of the hollow fiber membrane is 50 kPa or more and less than 100 kPa, the transmembrane differential pressure is 100 kPa or less when the IPA bubble point is 100 kPa or more and less than 150 kPa, and the transmembrane differential pressure is 200 kPa or less when the IPA bubble point is 150 kPa or more and 400 kPa or less; and the water-insoluble oil content in filtration treated water is less than 5 mg/L in the case where the water-insoluble oil content in oil-containing wastewater is 10 mg/L or more and 2,000 mg/L or less, and the water-insoluble oil content in filtration treated water is less than 1 mg/L in the case where the water-insoluble oil content in oil-containing wastewater is 3 mg/L or more and less than 10 mg/L.

16. An oil-containing wastewater treatment method using the separation membrane module for oil-containing wastewater treatment according to any one of Claims 1 to 14, **characterized in that**, in the case where the water-insoluble oil content in oil-containing wastewater is 3 to 200 mg/L and the concentration of suspended solids (SS) is 100 mg/L or less, external pressure-type all filtration is performed in which all of liquid to be treated is passed through the hollow fiber membrane, and in the case where the water-insoluble oil content in oil-containing wastewater is more than 200 mg/L and 2,000 mg/L or less or the concentration of suspended solids (SS) is 100 to 20,000 mg/L, internal pressure circulation-type or external pressure circulation-type filtration is performed in which liquid to be treated is circulated.

17. An oil-containing wastewater treatment method using the separation membrane module for oil-containing wastewater treatment according to any one of Claims 1 to 14, wherein after oil-field wastewater is subjected to pretreatment to reduce the water-insoluble oil content (n-hexane value), the resulting oil-containing wastewater is subjected to microfiltration with the separation membrane module.

18. The oil-containing wastewater treatment method according to Claim 17, wherein the pretreatment is pressure floatation treatment or electrical coagulation/electrical floatation treatment, and the n-hexane value after the treatment is 10 to 100 mg/L.

19. An oil-containing wastewater treatment method using the separation membrane module for oil-containing wastewater treatment according to any one of Claims 1 to 14, wherein oil-containing wastewater has an oil content of 20 to 2,000 mg/L and a suspended component content of 100 to 10,000 mg/L, and is heated at 60°C to 200°C, and the heated oil-containing wastewater is subjected to filtration treatment with the separation membrane module such that the water-insoluble oil content is 5 mg/L or less and the suspended component content is 0 to 1 mg/L in treated water.

20. An oil-containing wastewater treatment apparatus which is a filtration apparatus comprising:
the separation membrane module for oil-containing wastewater treatment according to any one of Claims 1 to 14; and
cleaning means which sends a cleaning liquid composed of an alkaline aqueous solution to the surface of the hollow fiber membrane in order to remove water-insoluble oil adhering to the surface of the hollow fiber membrane of the separation membrane module.

21. The oil-containing wastewater treatment apparatus according to Claim 20, wherein the apparatus includes an oil-containing wastewater storage tank, a cleaning liquid storage tank of the cleaning means, an inlet pipe through which each of the oil-containing wastewater storage tank and the cleaning liquid storage tank communicates with the inlet portion of the separation membrane module and which is inserted with a pump, and a circulation pipe through which each of the oil-containing wastewater storage tank and the cleaning liquid storage tank communicates with the discharge portion for untreated liquid of the separation membrane module; and
branch pipes of the inlet pipe and branch pipes of the circulation pipe are configured to communicate with the oil-containing wastewater storage tank and the cleaning liquid storage tank.

22. The oil-containing wastewater treatment apparatus according to Claim 21, wherein the discharge pressure of the pump inserted in the inlet pipe is 50 to 300 kPa, and a switching valve is inserted at the position from which the branch pipes diverge.
